# FASCICULE DE BREVET EUROPEEN

(11) **EP 1 323 905 B1**
(45) Date de publication et mention de la délivrance du brevet: **29.09.2004**
(21) Numéro de dépôt: 02293188.5
(22) Date de dépôt: 20.12.2002
(51) Int. Cl.: F01N 11/00

(54) **Procédé et dispositif de contrôle de l'état de fonctionnement d'un convertisseur catalytique d'une ligne d'échappement d'un moteur à combustion interne**
Verfahren und Vorrichtung zur Überwachung des Betriebszustandes eines Katalysators im Abgasstrang einer Brennkraftmaschine
Method and Apparatus for Monitoring the Operational State of a Catalytic Converter in the Exhaust System of an Internal Combustion Engine

(30) Priorité: 24.12.2001 FR 0116798
(43) Date de publication de la demande: 02.07.2003
(73) Titulaire: Renault s.a.s., 92100 Boulogne Billancourt (FR)
(72) Inventeur: Bonfand, Isabelle, 91230 Montgeron (FR); Leprieur, Laurent, 91470 Limours (FR); Bourret, Stéphane, 91620 la Ville du Bois (FR); Meurisse, Olivier, 92160 Antony (FR)

(56) Documents cités:
- EP-A- 0 756 071
- EP-A- 1 052 385
- DE-A- 19 963 903

## Description

La présente invention concerne le domaine du traitement des gaz d'échappement d'un moteur à combustion interne, par exemple de véhicule automobile et, en particulier, d'un moteur à combustion interne fonctionnant en mélange pauvre, notamment un moteur Diesel ou à essence.

Plus particulièrement, l'invention concerne un procédé et un dispositif de contrôle de l'état de fonctionnement d'un convertisseur catalytique dont est pourvu la ligne d'échappement du moteur.

Elle est destinée à contrôler que le convertisseur catalytique implanté dans la ligne d'échappement du moteur, est toujours apte à assurer convenablement sa fonction.

Les moteurs à combustion interne produisent des gaz d'échappement qui contiennent des substances polluantes, telles que les oxydes d'azote (Nox), les hydrocarbures imbrûlés (HC), le monoxyde de carbone (CO), qu'il est nécessaire de traiter avant de les évacuer vers l'atmosphère.

Ainsi, les véhicules automobiles sont souvent pourvus d'un convertisseur catalytique disposé dans la ligne d'échappement du moteur, permettant d'oxyder les molécules réductrices que sont le monoxyde de carbone CO et les hydrocarbures imbrûlés HC.

Dans le but de contrôler le bon fonctionnement du convertisseur, les véhicules automobiles sont en outre généralement pourvus d'un dispositif de contrôle de l'état de fonctionnement du convertisseur, apte, d'une part, à contrôler le bon fonctionnement du convertisseur et, d'autre part, à signaler tout dysfonctionnement au conducteur.

Parmi les causes de dysfonctionnement, le vieillissement du convertisseur engendre une baisse de l'efficacité de conversion des hydrocarbures imbrûlés et du monoxyde de carbone, due entre autre à une diminution de la surface active de traitement des polluants au sein du convertisseur d'où une augmentation de la température d'amorçage thermique des réactions d'oxydation produites au sein de ce dernier, c'est-à-dire la température à partir de laquelle l'efficacité de conversion est supérieure ou égale à 50%.

Pour contrôler le bon fonctionnement du convertisseur, certains dispositifs du contrôle utilisent des capteurs de réducteurs aptes à détecter la présence d'espèces chimiques réductrices dans les gaz d'échappement, qui sont destinés à analyser la quantité de polluants présents en aval du convertisseur.

Cette technique, bien que relativement efficace, présente un inconvénient majeur, lié au fait qu'elle nécessite le développement d'un capteur spécifique et non sélectif, ce qui rend sa mise en oeuvre relativement coûteuse.

Un procédé selon le préambule de la revendication 1 est connu du document EP 1 052 385 A.

Le but de l'invention est donc de pallier cet inconvénient et de permettre le contrôle du bon fonctionnement d'un convertisseur catalytique au moyen d'une technique peu onéreuse à mettre en oeuvre et fiable.

Ainsi, selon l'invention, il est proposé un procédé de contrôle de l'état de fonctionnement d'un convertisseur catalytique d'une ligne d'échappement d'un moteur à combustion interne, comprenant l'excitation du convertisseur par injection de carburant dans la ligne d'échappement et contrôle de la valeur d'une variable représentative de la quantité de chaleur dégagée par une réaction d'oxydation au sein du convertisseur catalytique.

Selon un aspect de ce procédé, on surveille la température de fonctionnement du convertisseur catalytique et l'on procède à l'injection de carburant à une température correspondant à une température d'amorçage thermique d'un convertisseur ayant un fonctionnement correct.

Ainsi, pour contrôler l'état de fonctionnement du convertisseur, on contrôle la quantité de chaleur dégagée lors du fonctionnement du convertisseur à une température correspondant à l'amorçage thermique d'un convertisseur sain.

En d'autres termes, il est possible de détecter l'accroissement de la température d'amorçage thermique du convertisseur pour décider, si cet accroissement dépasse une valeur de seuil prédéterminée, que le convertisseur est défectueux.

Selon un mode de mise en oeuvre de ce procédé, au cours de l'étape de contrôle de la valeur d'une variable représentative de la quantité de chaleur dégagée par la réaction d'oxydation, on compare la valeur de ladite variable avec une valeur de seuil de détection d'un dysfonctionnement du convertisseur.

De préférence, la valeur de seuil est une valeur de seuil variable en fonction des conditions de fonctionnement du moteur.

Selon une autre caractéristique de ce procédé, on surveille la température de fonctionnement du convertisseur à partir de la température des gaz d'échappement en amont du catalyseur.

Selon un mode de mise en oeuvre particulier, la température des gaz d'échappement est déterminée à partir d'un modèle thermique des gaz d'échappement adapté pour déterminer la température des gaz en fonction de paramètres de fonctionnement du moteur et/ou du convertisseur.

Selon un autre mode de mise en oeuvre, la température des gaz d'échappement en amont du convertisseur est déterminée en mesurant la température des gaz d'échappement en aval du convertisseur et en déterminant la température des gaz d'échappement en amont du convertisseur à partir de la température des gaz d'échappement en aval du convertisseur.

Selon une autre caractéristique de ce procédé, la variable représentative de la quantité de chaleur dégagée par la réaction d'oxydation est constituée par la température en aval du convertisseur.

Selon une autre caractéristique avantageuse de ce procédé, la température à laquelle est effectuée l'injection de carburant est déterminée en fonction du débit de gaz d'échappement dans le convertisseur.

Avantageusement, l'injection de carburant dans la ligne d'échappement est effectuée en injectant du carburant dans les cylindres du moteur.

Au cours de l'injection de carburant, on règle de préférence le débit du carburant et l'instant de l'injection en fonction de paramètres de fonctionnement du moteur.

Selon l'invention, il est également proposé un dispositif de contrôle de l'état de fonctionnement d'un convertisseur catalytique d'une ligne d'échappement d'un moteur à combustion interne pour la mise en oeuvre d'un procédé tel que défini ci-dessus.

Selon un aspect de ce dispositif, celui-ci comprend des moyens de détermination de la température régnant en amont du convertisseur, des moyens pour injecter du carburant dans la ligne d'échappement du moteur à un instant auquel la température en amont du convertisseur correspond à un amorçage thermique d'un convertisseur ayant un fonctionnement correct, et des moyens de contrôle de la quantité de chaleur dégagée par la réaction produite dans le convertisseur sous l'effet de cette injection de carburant.

Selon une caractéristique de ce dispositif, les moyens de détermination de la température régnant en amont du convertisseur comportent des moyens de mesure de la température des gaz d'échappement en amont du convertisseur catalytique.

Selon une autre caractéristique, les moyens de détermination de la température régnant en amont du convertisseur comportent des moyens de mesure de paramètres de fonctionnement du moteur et/ou du convertisseur et un modèle thermique du convertisseur adapté pour déterminer la température des gaz en amont du convertisseur en fonction de paramètres de fonctionnement du moteur et/ou du convertisseur.

Selon un mode de réalisation, les moyens de contrôle de la quantité de chaleur dégagée par la réaction produite dans le convertisseur comportent des moyens de mesure de la température des gaz d'échappement en aval du convertisseur et des moyens de comparaison de la température des gaz en aval du convertisseur avec une valeur de seuil de détection d'un dysfonctionnement.

Avantageusement, le dispositif comporte des moyens de mémorisation dans lesquels sont stockées un ensemble de valeurs de seuil associées chacune à un des paramètres de fonctionnement du moteur et/ou du convertisseur, la valeur de seuil fournie aux moyens de comparaison étant extraite des moyens de mémorisation en fonction des paramètres de fonctionnement mesurés.

Selon un autre mode de réalisation particulier, le dispositif comporte en outre, stockées en mémoire, un ensemble de valeurs de température d'amorçage thermique du convertisseur en fonction du débit de gaz d'échappement dans le convertisseur.

D'autres buts, caractéristiques et avantages de l'invention ressortiront de la description suivante, donnée uniquement à titre d'exemple non limitatif, et faite en référence aux dessins annexés, sur lesquels :
- la figure 1 est une vue schématique d'un moteur à combustion interne équipé d'une ligne d'échappement pourvue d'un convertisseur catalytique associé à un dispositif de contrôle conforme à l'invention ;
- la figure 2 montre des courbes illustrant la variation de l'efficacité de conversion du monoxyde de carbone CO en fonction de la température en entrée du convertisseur, respectivement pour un convertisseur neuf et pour un convertisseur vieilli ;
- la figure 3 montre des courbes illustrant la variation de l'efficacité de conversion des hydrocarbures imbrûlés HC en fonction de la température en entrée du convertisseur catalytique, respectivement pour un convertisseur neuf et pour un convertisseur vieilli ; et
- la figure 4 montre des courbes illustrant le procédé de contrôle de l'état de fonctionnement du convertisseur catalytique selon l'invention.

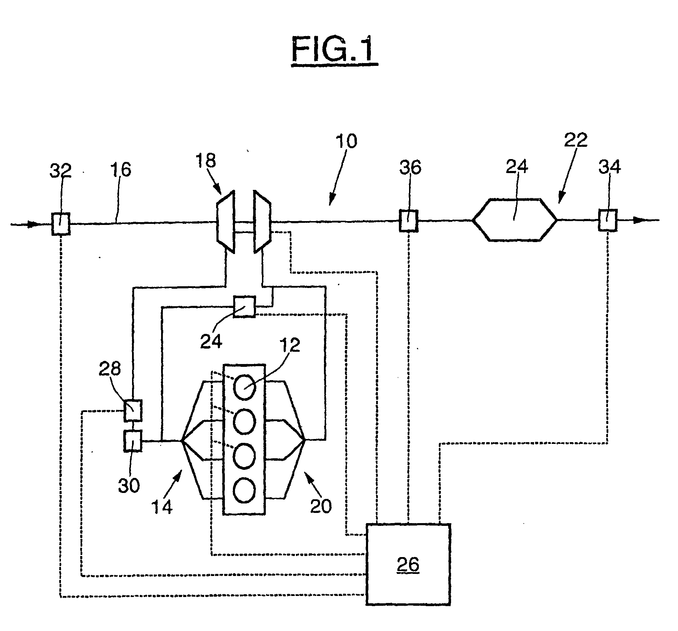

Sur la figure 1, on a représenté, de manière schématique, la structure générale d'un moteur à combustion interne d'un véhicule automobile, désigné par la référence numérique générale 10.

Dans l'exemple de réalisation considéré, le moteur 10 est pourvu de quatre cylindres 12 en ligne.

Les cylindres 12 sont alimentés en air par l'intermédiaire d'un répartiteur d'admission 14, lui-même alimenté par une conduite 16 pourvue d'un filtre à air (non représenté) et d'un turbocompresseur 18 de suralimentation du moteur en air.

Un collecteur d'échappement 20 récupère les gaz d'échappement issus de la combustion et évacue ces derniers vers l'extérieur, en passant par le turbocompresseur 18, et par une ligne d'échappement 22.

Un circuit de recirculation des gaz d'échappement, comprenant une partie du circuit d'alimentation du moteur en air et une partie du circuit d'échappement, récupère une partie des gaz d'échappement et les réinjecte dans le répartiteur d'admission 14, de manière à limiter la quantité d'oxyde d'azote produit par la combustion tout en évitant la formation de fumées dans les gaz d'échappement.

Comme on le voit sur cette figure 1, le circuit de recirculation comporte essentiellement une soupape de réglage du flux de gaz d'échappement recirculés, désignée par la référence numérique générale 24.

En ce qui concerne la ligne d'échappement 22, celle-ci comporte un filtre à particules (non représenté) ainsi qu'un convertisseur catalytique 24 assurant essentiellement une oxydation des molécules réductrices que sont le monoxyde de carbone CO et les hydrocarbures imbrûlés HC.

Le convertisseur catalytique 24 est constitué par un élément de type classique, à la portée d'un homme du métier. Il ne sera donc pas décrit en détail par la suite

On notera néanmoins qu'il possède une structure monolithique et est pourvu de canaux imprégnés d'une phase catalytique, telle qu'un métal précieux, et présentant une grande surface de contact avec les gaz d'échappement.

On notera également que le monolithe entrant dans la constitution du convertisseur catalytique 24 peut être intégré au filtre à particules ou à un piège à Nox, afin de réaliser un couplage entre le post-traitement des gaz d'échappement par oxydation du monoxyde de carbone et des hydrocarbures imbrûlés HC au post-traitement des particules et des NOx.

Enfin, le moteur 10 est associé à un calculateur embarqué 26, assurant essentiellement le contrôle du fonctionnement du moteur 10, notamment le réglage de ses paramètres de fonctionnement, ainsi que le contrôle du fonctionnement du convertisseur catalytique 24.

Pour procéder au contrôle du fonctionnement du moteur 10, celui-ci est pourvu, notamment, d'un capteur 28 de pression de suralimentation, d'un capteur 30 de température d'admission d'air dans le répartiteur d'admission 14, et d'un capteur de débit 32 équipant la conduite 16 d'alimentation. Ces capteurs, ainsi que les principaux organes fonctionnels du moteur et de son circuit d'alimentation en air, sont raccordés au calculateur 26.

Pour le contrôle du bon fonctionnement du convertisseur, et comme cela sera indiqué en détail par la suite, le calculateur comporte des moyens de mémorisation dans lesquels sont stockées un ensemble de données obtenues par apprentissage préalable correspondant notamment à des valeurs de seuil de détection de dysfonctionnement, ainsi que, le cas échéant, des valeurs de température en amont du convertisseur en fonction de la température régnant en aval, et des moyens logiciels de contrôle de la quantité de chaleur dégagée par la réaction chimique engendrée par la post-injection au sein du convertisseur par comparaison avec des valeurs de seuil.

Pour procéder au contrôle de l'état de fonctionnement du convertisseur catalytique 24, le calculateur 26 est raccordé à un capteur 34 de mesure de la température des gaz d'échappement en aval du convertisseur 24, ainsi qu'à un capteur 36 de mesure de la température des gaz d'échappement en amont du convertisseur 24.

Ainsi que cela sera mentionné par la suite, le capteur 36 de mesure de température est un élément optionnel, la température régnant en amont du convertisseur 24 pouvant être estimée, soit à partir d'un modèle mathématique et de paramètres de fonctionnement du moteur et/ou du convertisseur catalytique, soit à partir de la température régnant en aval du convertisseur hors phase de post-injection.

Les mesures de température fournies par les capteurs 34 et 36 sont ensuite traitées par les moyens de calcul du calculateur 26 de manière à déterminer l'élévation de température d'amorçage du convertisseur pour détecter une baisse d'efficacité consécutive de conversion des hydrocarbures imbrûlés HC et du monoxyde de carbone CO.

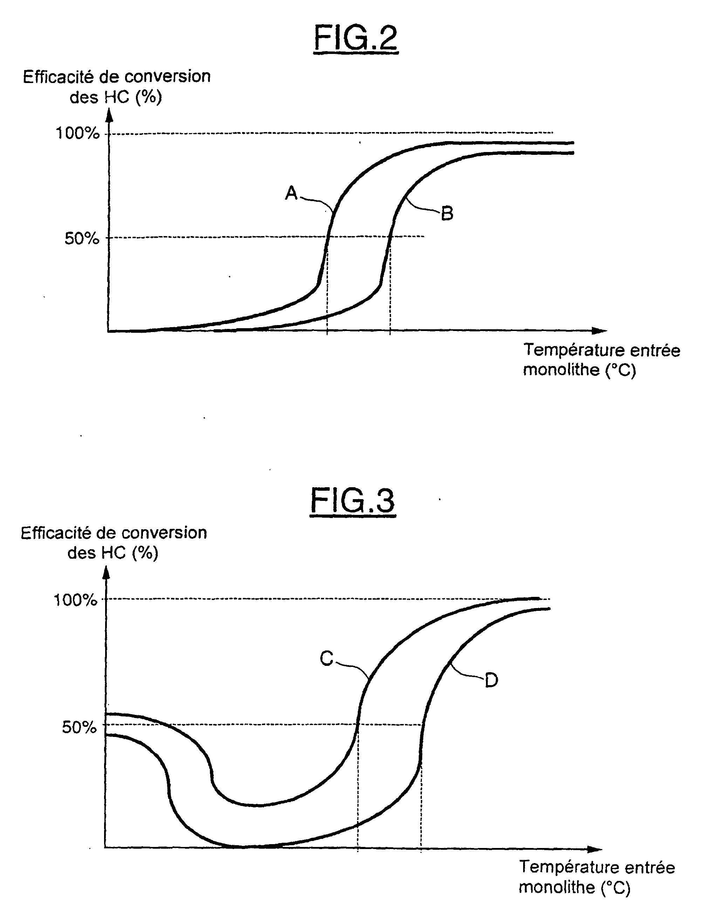

En effet, en se référant maintenant à la figure 2, sur laquelle on a représenté la variation de l'efficacité de conversion du CO par le convertisseur catalytique 24 en fonction de la température en entrée du monolithe, pour un convertisseur neuf (courbe A) et pour un convertisseur vieilli (courbe B), on constate que le vieillissement d'un convertisseur s'accompagne d'une augmentation relativement importante de la température d'amorçage du convertisseur, c'est-à-dire de la température à partir de laquelle l'efficacité de conversion est d'au moins 50%.

De même, en se référant à la figure 3, sur laquelle on a représenté l'évolution de l'efficacité de conversion des hydrocarbures imbrûlés HC en fonction de la température en entrée du monolithe, respectivement pour un convertisseur neuf (courbe C) et pour un convertisseur vieilli (courbe D), on constate également que le vieillissement du convertisseur s'accompagne d'une élévation relativement importante de la température d'amorçage du convertisseur.

Néanmoins, à haute température, la baisse de l'efficacité de conversion est négligeable.

Ainsi, pour contrôler le bon fonctionnement du convertisseur, le calculateur 26 procède à un contrôle de la température d'amorçage du convertisseur ou, en d'autres termes, contrôle, pour une température de fonctionnement correspondant à la température d'amorçage d'un convertisseur sain, la quantité de chaleur dégagée par la réaction chimique d'oxydation mise en oeuvre au sein du convertisseur.

Pour ce faire, le calculateur 26 surveille la température régnant en amont du convertisseur 24 puis, dès que cette température atteint le niveau de température d'amorçage d'un convertisseur sain, il procède à une excitation du convertisseur 24 par injection de carburant dans les cylindres du moteur, en pilotant la pompe d'alimentation d'un système d'injection du moteur ou en injectant directement en amont du catalyseur.

On notera néanmoins que la température d'amorçage d'un convertisseur dépend du temps de séjour des gaz dans ce dernier. Aussi, la température d'amorçage à laquelle est effectuée la post-injection est en outre déterminée en fonction du débit de gaz dans le convertisseur, par exemple à partir d'une cartographie de températures d'amorçage fonction du débit de gaz.

La quantité de chaleur dégagée par la réaction mise en oeuvre au sein du convertisseur 24, est alors analysée par le calculateur 26, par exemple par comparaison avec une valeur de seuil en dessous de laquelle on considère que le convertisseur est défectueux.

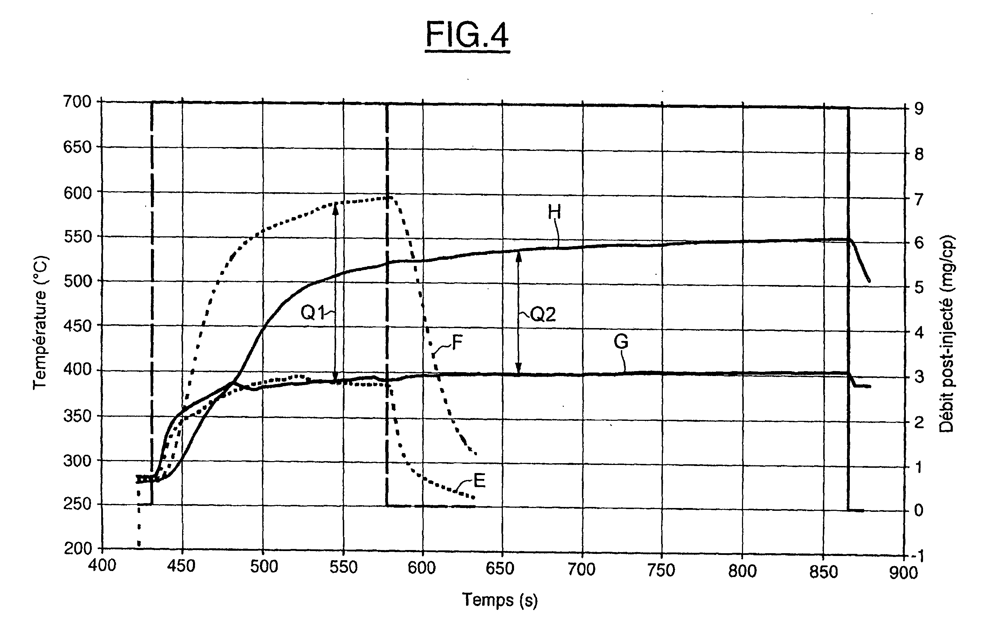

En se référant maintenant à la figure 4, sur laquelle on a représenté l'évolution en fonction du temps de la température en amont d'un convertisseur neuf (courbe E), la température en aval d'un convertisseur neuf (courbe F), la température en amont d'un convertisseur vieilli (courbe G) et la température en aval d'un convertisseur vieilli (courbe H), la quantité Q1 de chaleur dégagée par la réaction chimique d'oxydation au sein du convertisseur du fait de la post-injection, pour un convertisseur neuf, est très supérieure à la quantité de chaleur Q2 dégagée au cours de la réaction chimique d'oxydation par un convertisseur vieilli au cours de la post-injection.

Ainsi, après avoir effectué la post-injection de carburant, le calculateur procède à un calcul de la différence entre la température en aval du catalyseur et la température en amont du catalyseur, puis procède à une comparaison de la différence ainsi calculée avec une valeur de seuil de détection d'un dysfonctionnement, traduisant le vieillissement du catalyseur.

La valeur de seuil utilisée pour contrôler le bon fonctionnement du catalyseur correspond à une quantité de chaleur dégagée par un convertisseur dont le vieillissement, et donc la capacité de conversion, est à la limite de l'admissibilité.

On notera que, de préférence, le calculateur 26 comporte, stockées en mémoire, un ensemble de valeurs de seuil associées chacune à des paramètres spécifiques de fonctionnement du moteur.

Ainsi, pour procéder au contrôle de l'état de fonctionnement du convertisseur, le calculateur 26 procède à une acquisition de paramètres de fonctionnement du moteur, tels que, notamment, le régime de fonctionnement du moteur, la pression régnant dans le circuit d'admission d'air, ..., qui sont fournis par des capteurs dont est équipé le moteur, de manière à déterminer les conditions de fonctionnement de ce dernier, puis extrait de la mémoire une valeur de seuil correspondante, de manière à adapter le niveau minimum de quantité de chaleur admissible aux paramètres de fonctionnement du moteur.

On notera également que le calculateur 26 comporte également, stockée en mémoire, une cartographie dans laquelle sont mémorisées un ensemble de valeurs de débit de carburant et de phasage des post-injections en fonction des paramètres de fonctionnement du moteur, de manière à optimiser l'arrivée des hydrocarbures dans le convertisseur alors qu'il s'amorce.

En effet, l'injection de carburant lors de la phase de détente est susceptible de provoquer une dilution du lubrifiant lorsque les jets de carburant touchent les parois des fûts des cylindres alors que le piston redescend.

Ainsi, en fonction des conditions de fonctionnement du moteur, et de sa géométrie, la post-injection est réalisée entre environ 80° et 100° après point mort haut (PMH).

De même, le débit de carburant injecté est compris dans une plage bien déterminée afin de ne pas dégrader le convertisseur par une exothermicité trop conséquente.

On notera également que la post-injection est effectuée à un instant du cycle approprié pour éviter toute création de couple.

Pour la détermination de l'instant auquel la post-injection doit être réalisée, le calculateur acquiert la valeur de la température régnant en amont du convertisseur pris compare cette température à une température d'amorçage d'un convertisseur neuf. Dès que cette température est atteinte, il provoque la post-injection.

Comme indiqué précédemment, le capteur 36 de mesure de la température régnant en amont du convertisseur 24 est optionnel.

Ainsi, dans ce cas, pour déterminer l'instant auquel la post-injection doit être effectuée pour procéder au contrôle de l'état de fonctionnement du convertisseur, selon une première variante, le calculateur 26 comporte, stockées en mémoire, des valeurs de température en amont du convertisseur, en fonction de la température régnant en aval et en fonction de conditions de fonctionnement du moteur.

Ainsi, le calculateur 26 procède à un traitement de la température régnant en aval du convertisseur de manière à extraire des moyens de mémorisation une valeur de température amont correspondante.

La post-injection est alors réalisée dès que cette température correspond à une température d'amorçage d'un convertisseur sain ou neuf.

Selon une autre variante, le calculateur 26 comporte un modèle thermique des gaz d'échappement et procède ainsi à un calcul de la température amont à partir des paramètres de fonctionnement du moteur et/ou du convertisseur.

Dans ce cas, c'est-à-dire si le dispositif de contrôle est dépourvu de capteurs 36 de mesure de température en amont du convertisseur, pour la détection du vieillissement du convertisseur, le calculateur 26 procède à un traitement de la température en aval du convertisseur, par comparaison de cette dernière avec une valeur de seuil extraite des moyens de mémorisation correspondant à la température régnant en aval d'un convertisseur dont l'efficacité de conversion est à la limite de l'acceptable, éventuellement en fonction du point de fonctionnement du moteur.

## Revendications

1. Procédé de contrôle de l'état de fonctionnement d'un convertisseur catalytique (24) d'une ligne d'échappement d'un moteur à combustion interne, comprenant l'excitation du convertisseur (24) par injection de carburant dans la ligne d'échappement (12) et contrôle de la valeur d'une variable représentative de la quantité de chaleur dégagée par une réaction d'oxydation au sein du convertisseur catalytique, **caractérisé en ce que** l'on surveille la température de fonctionnement du convertisseur catalytique et l'on procède à l'injection de carburant à une température correspondant à une température d'amorçage thermique d'un convertisseur ayant un fonctionnement correct.

2. Procédé de contrôle selon la revendication 1, **caractérisé en ce qu'**au cours de l'étape de contrôle de la valeur d'une variable représentative de la quantité de chaleur dégagée par la réaction d'oxydation, on compare la valeur de ladite variable avec une valeur de seuil de détection d'un dysfonctionnement du convertisseur.

3. Procédé de contrôle selon la revendication 2, **caractérisé en ce que** la valeur de seuil est une valeur de seuil variable en fonction des conditions de fonctionnement du moteur.

4. Procédé de contrôle selon l'une quelconque des revendications 1 à 3, **caractérisé en ce que** l'on surveille la température de fonctionnement du convertisseur à partir de la température des gaz d'échappement en amont du catalyseur.

5. Procédé de contrôle selon la revendication 4, **caractérisé en ce que** la température des gaz d'échappement est déterminée à partir d'un modèle thermique des gaz d'échappement adapté pour déterminer la température des gaz en fonction de paramètres de fonctionnement du moteur et/ou du convertisseur.

6. Procédé de contrôle selon la revendication 4, **caractérisé en ce que** la température des gaz d'échappement en amont du convertisseur est déterminée en mesurant la température des gaz d'échappement en aval du convertisseur et en déterminant la température des gaz d'échappement en amont du convertisseur à partir de la température des gaz d'échappement en aval du convertisseur.

7. Procédé de contrôle selon l'une quelconque des revendications 1 à 6, **caractérisé en ce que** la variable représentative de la quantité de chaleur dégagée par la réaction d'oxydation est constituée par la température en aval du convertisseur.

8. Procédé de contrôle selon l'une quelconque des revendications 1 à 7, **caractérisé en ce que** la température à laquelle est effectuée l'injection de carburant est déterminée en fonction du débit de gaz d'échappement dans le convertisseur.

9. Procédé de contrôle selon l'une quelconque des revendications 1 à 8, **caractérisé en ce que** l'injection de carburant dans la ligne d'échappement (22) est effectuée en injectant du carburant dans les cylindres (12) du moteur.

10. Procédé de contrôle selon la revendication 9, **caractérisé en ce qu'**au cours de l'injection de carburant, on règle le débit du carburant et l'instant de l'injection en fonction de paramètres de fonctionnement du moteur.

11. Dispositif de contrôle de l'état de fonctionnement d'un convertisseur catalytique (24) d'une ligne d'échappement d'un moteur à combustion interne pour la mise en oeuvre d'un procédé selon l'une quelconque des revendications 1 à 10, comprenant des moyens de détermination (36 ; 26, 34) de la température régnant en amont du convertisseur, des moyens pour injecter du carburant dans la ligne d'échappement (22) du moteur à un instant auquel la température en amont du convertisseur correspond à un amorçage thermique d'un convertisseur ayant un fonctionnement correct, et des moyens de contrôle (26) de la quantité de chaleur dégagée par la réaction produite dans le convertisseur sous l'effet de cette injection de carburant.

12. Dispositif de contrôle selon la revendication 11, **caractérisé en ce que** les moyens de détermination de la température régnant en amont du convertisseur comportent des moyens de mesure (36) de la température des gaz d'échappement en amont du convertisseur catalytique.

13. Dispositif de contrôle selon la revendication 11, **caractérisé en ce que** les moyens de détermination de la température régnant en amont du convertisseur comportent des moyens (28, 30) de mesure de paramètres de fonctionnement du moteur et/ou du convertisseur et un modèle thermique des gaz d'échappement adapté pour déterminer la température des gaz en amont du convertisseur en fonction de paramètres de fonctionnement du moteur et/ou du convertisseur.

14. Dispositif de contrôle selon l'une quelconque des revendications 11 à 13, **caractérisé en ce que** les moyens de contrôle de la quantité de chaleur dégagée par la réaction produite dans le convertisseur comportent des moyens de mesure (34) de la température des gaz d'échappement en aval du convertisseur et des moyens de comparaison (26) de la température des gaz en aval du convertisseur avec une valeur de seuil de détection d'un dysfonctionnement.

15. Dispositif de contrôle selon la revendication 14, **caractérisé en ce qu'**il comporte des moyens de mémorisation dans lesquels sont stockées un ensemble de valeurs de seuil associées chacune à un des paramètres de fonctionnement du moteur et/ou du convertisseur, la valeur de seuil fournie aux moyens de comparaison (26) étant extraite des moyens de mémorisation en fonction des paramètres de fonctionnement mesurés.

16. Dispositif de contrôle selon l'une quelconque des revendications 11 à 15, **caractérisé en ce qu'**il comporte en outre, stockées en mémoire, un ensemble de valeurs de température d'amorçage thermique du convertisseur en fonction du débit de gaz d'échappement dans le convertisseur.

## Patentansprüche

1. Verfahren zur Kontrolle des Betriebszustandes eines katalytischen Konverters (24) einer Abgasleitung eines Verbrennungsmotors, umfassend die Anregung des Konverters (24) durch Einspritzen von Kraftstoff in die Abgasleitung (12) und Kontrolle des Wertes einer Variablen, die repräsentativ für die Wärmemenge ist, welche durch eine Oxidationsreaktion im Inneren des katalytischen Konverters freigesetzt wird, **dadurch gekennzeichnet, dass** die Betriebstemperatur des katalytischen Konverters überwacht wird und Kraftstoff eingespritzt wird bei einer Temperatur, welche einer thermischen Zündtemperatur eines Konverters entspricht, der ein korrektes Funktionieren besitzt.

2. Verfahren zur Kontrolle gemäß Anspruch 1, **dadurch gekennzeichnet, dass** im Verlauf des Schritts zur Kontrolle des Wertes einer Variablen, die repräsentativ für die Wärmemenge ist, welche durch die Oxidationsreaktion freigesetzt wird, der Wert dieser Variablen mit einem Schwellwert zur Erkennung einer Funktionsstörung des Konverters verglichen wird.

3. Verfahren zur Kontrolle gemäß Anspruch 2, **dadurch gekennzeichnet, dass** der Schwellwert ein variabler Schwellwert abhängig von dem Betriebszustand des Motors ist.

4. Verfahren zur Kontrolle gemäß einem der Ansprüche 1 bis 3, **dadurch gekennzeichnet, dass** die Betriebstemperatur des Konverters ausgehend von der Temperatur der Abgase stromaufwärts des Katalysators überwacht wird.

5. Verfahren zur Kontrolle gemäß Anspruch 4, **dadurch gekennzeichnet, dass** die Temperatur der Abgase bestimmt wird, ausgehend von einem thermischen Modell der Abgase, angepasst, um die Temperatur der Gase in Abhängigkeit von Betriebsparametern des Motors und/oder des Konverters zu bestimmen.

6. Verfahren zur Kontrolle gemäß Anspruch 4, **dadurch gekennzeichnet, dass** die Temperatur der Abgase stromaufwärts des Konverters durch Messen der Temperatur der Abgase stromabwärts des Konverters bestimmt wird und durch Bestimmen der Temperatur der Abgase stromaufwärts des Konverters ausgehend von der Temperatur der Abgase stromabwärts des Konverters.

7. Verfahren zur Kontrolle gemäß einem der Ansprüche 1 bis 6, **dadurch gekennzeichnet, dass** die Variable, die repräsentativ für die Wärmemenge ist, die durch die Oxidationsreaktion freigesetzt wird, gebildet wird durch die Temperatur stromabwärts des Konverters.

8. Verfahren zur Kontrolle gemäß einem der Ansprüche 1 bis 7, **dadurch gekennzeichnet, dass** die Temperatur, bei der die Einspritzung von Kraftstoff bewirkt wird, bestimmt wird in Abhängigkeit von der Menge der Abgase in dem Konverter.

9. Verfahren zur Kontrolle gemäß einem der Ansprüche 1 bis 8, **dadurch gekennzeichnet, dass** die Einspritzung von Kraftstoff in die Abgasleitung (22) bewirkt wird durch Einspritzen von Kraftstoff in die Zylinder (12) des Motors.

10. Verfahren zur Kontrolle gemäß Anspruch 9, **dadurch gekennzeichnet, dass** im Verlauf der Einspritzung von Kraftstoff, die Menge des Kraftstoffs und der Zeitpunkt der Einspritzung in Abhängigkeit von Betriebsparametern des Motors geregelt wird.

11. Vorrichtung zur Kontrolle des Betriebszustandes eines katalytischen Konverters (24) einer Abgasleitung eines Verbrennungsmotors zur Verwirklichung eines Verfahrens gemäß einem der Ansprüche 1 bis 10, umfassend Mittel zur Bestimmung (36; 26, 34) der Temperatur, die stromaufwärts des Konverters herrscht, Mittel zum Einspritzen von Kraftstoff in die Abgasleitung (22) des Motors zu einem Zeitpunkt, in welchem die Temperatur stromaufwärts des Konverters einer thermischen Zündung eines Konverters entspricht, der ein korrektes Funktionieren besitzt, und Mittel zur Kontrolle (26) der Wärmemenge, welche durch die Reaktion freigesetzt wird, die in dem Konverter unter der Wirkung dieses Einspritzens von Kraftstoff produziert wird.

12. Vorrichtung zur Kontrolle gemäß Anspruch 11, **dadurch gekennzeichnet, dass** die Mittel zur Bestimmung der Temperatur, die stromaufwärts des Konverters herrscht, Mittel (36) zur Messung der Temperatur der Abgase stromaufwärts des Konverters umfassen.

13. Vorrichtung zur Kontrolle gemäß Anspruch 11, **dadurch gekennzeichnet, dass** die Mittel zur Bestimmung der Temperatur, die stromaufwärts des Konverters herrscht, Mittel (28, 30) zur Messung umfassen der Betriebsparameter des Motors und/oder des Konverters und ein thermisches Modell der Abgase, angepasst, um die Temperatur der Abgase stromaufwärts des Konverters in Abhängigkeit der Betriebsparameter des Motors und/oder des Konverters zu bestimmen.

14. Vorrichtung zur Kontrolle gemäß einem der Ansprüche 11 bis 13, **dadurch gekennzeichnet, dass** die Mittel zur Kontrolle der Wärmemenge, welche durch die Reaktion freigesetzt wird, die in dem Konverter produziert wurde, Mittel zum Messen (34) der Temperatur der Abgase stromabwärts des Konverters und Mittel zum Vergleichen (26) der Temperatur der Abgase stromabwärts des Konverters mit einem Schwellwert des Erkennens einer Funktionsstörung umfassen.

15. Vorrichtung zur Kontrolle gemäß Anspruch 14, **dadurch gekennzeichnet, dass** sie Mittel zur Speicherung aufweist, in welchen eine Gruppe von Schwellwerten abgelegt sind, von denen jeder einem der Betriebsparameter des Motors und/oder des Konverters zugeordnet ist, wobei der an die Mittel zum Vergleichen (26) gelieferte Schwellwert den Mitteln zum Speichern in Abhängigkeit des Betriebs der gemessenen Betriebsparameter entnommen wird.

16. Vorrichtung zur Kontrolle gemäß einem der Ansprüche 11 bis 15, **dadurch gekennzeichnet, dass** er ferner, im Speicher abgelegt, eine Gruppe von Werten der thermischen Zündtemperatur des Konverters in Abhängigkeit der Abgasmenge in dem Konverter umfasst.

## Claims

1. A method for controlling the working condition of a catalytic converter (24) in an exhaust line of an internal combustion engine, comprising exciting the converter (24) by injecting fuel into the exhaust line (12) and controlling the value of a variable which represents the quantity of heat released by an oxidation reaction within the catalytic converter, **characterized in that** the working temperature of the catalytic converter is monitored and fuel is injected at a temperature corresponding to a thermal start-up temperature for a converter that is functioning correctly.

2. A controlling method according to claim 1, **characterized in that** during the step for controlling the value of a variable which represents the quantity of heat released by the oxidation reaction, the value of said variable is compared with a threshold value for detecting a converter dysfunction.

3. A controlling method according to claim 2, **characterized in that** the threshold value is a threshold value that varies as a function of the functional conditions of the engine.

4. A controlling method according to any one of claims 1 to 3, **characterized in that** the working temperature of the converter is monitored by employing the temperature of the exhaust gas upstream of the catalyst.

5. A controlling method according to claim 4, **characterized in that** the temperature of the exhaust gas is determined from a thermal model of the exhaust gas adapted to determine the temperature of the gas as a function of the functional parameters of the engine and/or the converter.

6. A controlling method according to claim 4, **characterized in that** the temperature of the exhaust gas upstream of the converter is determined by measuring the temperature of the exhaust gas downstream of the converter and by determining the temperature of the exhaust gas upstream of the converter from the temperature of the exhaust gas downstream of the converter.

7. A controlling method according to any one of claims 1 to 6, **characterized in that** the variable which represents the quantity of heat released by the oxidation reaction is constituted by the temperature downstream of the converter.

8. A controlling method according to any one of claims 1 to 7, **characterized in that** the temperature at which fuel is injected is determined as a function of the flow rate of the exhaust gas in the converter.

9. A controlling method according to any one of claims 1 to 8, **characterized in that** fuel is injected into the exhaust line (22) by injecting fuel into the engine cylinders (12).

10. A controlling method according to claim 9, **characterized in that** during fuel injection, the flow rate of the fuel and the injection timing are adjusted as a function of the functional parameters of the engine.

11. A device for controlling the working condition of a catalytic converter (24) in an exhaust line of an internal combustion engine for carrying out a method according to any one of claims 1 to 10, comprising means (36; 26, 34) for determining the prevailing temperature upstream of the converter, means for injecting fuel into the exhaust line (22) of the engine at a point at which the temperature upstream of the converter corresponds to thermal start-up of a properly functioning converter, and means (26) for controlling the quantity of heat released by the reaction produced in the converter under the effect of said fuel injection.

12. A controlling device according to claim 11, **characterized in that** the means for determining the prevailing temperature upstream of the converter comprise means (36) for measuring the temperature of the exhaust gas upstream of the catalytic converter.

13. A controlling device according to claim 11, **characterized in that** the means for determining the prevailing temperature upstream of the converter comprise means (28, 30) for measuring the functional parameters of the engine and/or the converter and a thermal model of the converter adapted to determine the temperature of the gas upstream of the converter as a function of the functional parameters of the engine and/or the converter.

14. A controlling device according to any one of claims 11 to 13, **characterized in that** the means for controlling the quantity of heat released by the reaction produced in the converter comprise means (34) for measuring the temperature of the exhaust gas downstream of the converter and means (26) for comparing the temperature of the gas downstream of the converter with a threshold value for detecting a dysfunction.

15. A controlling device according to claim 14, **characterized in that** it comprises storage means in which a set of threshold values each associated with one of the functional parameters of the engine and/or converter are stored, the threshold value supplied to the comparison means (26) being extracted from the storage means as a function of the measured functional parameters.

16. A controlling device according to any one of claims 11 to 15, **characterized in that** the device further comprises, stored in the memory, a set of thermal start-up temperature values for the converter as a function of the flow rate of the exhaust gas in the converter.
